**Europäisches Patentamt**

**European Patent Office**

**Office européen des brevets**

(19)

(11) Veröffentlichungsnummer: **0 142 525**

**B1**

(12) ## EUROPÄISCHE PATENTSCHRIFT

(45) Veröffentlichungstag der Patentschrift:
**12.08.87**

(51) Int. Cl.⁴: **F 02 M 55/02**

(21) Anmeldenummer: **84901741.3**

(22) Anmeldetag: **18.04.84**

(86) Internationale Anmeldenummer:
**PCT/DE 84/00092**

(87) Internationale Veröffentlichungsnummer:
**WO 84/04566 (22.11.84 Gazette 84/27)**

(54) **EINSPRITZLEITUNGSVERBINDUNG.**

(30) Priorität: **09.05.83 DE 3316979**

(43) Veröffentlichungstag der Anmeldung:
**29.05.85 Patentblatt 85/22**

(45) Bekanntmachung des Hinweises auf die Patenterteilung:
**12.08.87 Patentblatt 87/33**

(84) Benannte Vertragsstaaten:
**AT BE DE FR GB NL SE**

(56) Entgegenhaltungen:
**FR-A-712 765**
**GB-A-1 756**
**US-A-2 150 524**

(73) Patentinhaber: **GUIDO, Jürgen, Borsig- Strasse 4, D-8402 Neutraubling (DE)**

(72) Erfinder: **BINZER, Norbert, Röntgen- Strasse 54, D-8402 Neutraubling (DE)**
Erfinder: **Guido, Jürgen, Borsig- Strasse 4, D-8402 Neutraubling (DE)**

(74) Vertreter: **Uri, Peter Alexander, Dipl.- Ing., Patentanwälte Strohschänk, Uri & Strasser Innere Wiener Strasse 8, D-8000 München 80 (DE)**

EP 0 142 525 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung bezieht sich auf eine Einspritzleitungsverbindung für Verbrennungskraftmaschinen gemäß der Gattung des Patentanspruchs 1 und auf ein Herstellungsverfahren für einen Anschlußnippel eines Druckanschlusses derselben.

Da der Kraftstoff den einzelnen Arbeitszylindern von Verbrennungskraftmaschinen meist unter erheblichem Druck zugeführt wird, der bei Dieselmotoren mehrere hundert bar betragen kann, sind an den Überwurfmuttern der Druckanschlüsse der hier betroffenen Einspritzleitungsverbindungen erhebliche Schraubenkräfte aufzubringen, damit zwischen dem äußeren Dichtkegel jedes Anschlußnippels und dem Innenkonus des zugeordneten Anschlußstutzens eine zuverlässige Abdichtung gewährleistet wird. Dabei ist zu berücksichtigen, daß für die Einspritzleitungen, die auf dem Wege von der Einspritzpumpe zur zugeordneten Einspritzdüse am Arbeitszylinder der Brennkraftmaschine stets mehrfach gekrümmt werden müssen, nur weicher, unlegierter Stahl niedriger Festigkeit verwendet und auch eine örtliche Härtung dieses Materials an den angeformten Anschlußnippeln nicht zugelassen werden kann, weil dann das vom gehärteten Anschlußnippel ausgehende Material der Einspritzleitung gegenüber den unvermeidlichen Betriebsschwingungen der Einspritzleitung bei laufender Brennkraftmaschine nicht ausreichend elastisch nachgeben könnte und von diesen Anschlußstellen dann leicht Schwingungsbrüche ausgehen könnten. Man hat sich deshalb damit abgefunden, daß der Zwischen der Überwurfmutter und dem Anschlußstutzen jedes Druckanschlusses eingespannte Anschlußnippel bei wiederholtem Aus- und Einbau einer Einspritzleitung Verformungen erleidet, die keine zuverlässige Abdichtung mehr zulassen und damit die ganze Einspritzleitung unbrauchbar machen. Ungünstig wirkt sich auch aus, daß das Material der Nippel beim Anziehen der Überwurfmuttern außer der axialen Druckbeanspruchung noch eine in Umfangsrichtung wirkende Reibbeanspruchung erfährt, die zu einem zusätzlichen Verschleiß der Nippel führt. Schließlich entstehen beim mehrmaligen Ein- und Ausbau einer Einspritzleitung an deren Enden wegen der vom Hohlkegel der Anschlußstutzen ausgehenden radialen Kräfte Einschnürungen ihres Innendurchmessers.

Gemäß dem in der GB-A- 888 055 (vgl. auch FR-A- 1 260 967) geschilderten Stand der Technik und dem DIN-Blatt 73365 Blatt 3 vom Januar 1970 hat man zur Vermeidung des letztgenannten Verschleißes innerhalb der Überwurfmutter zwischen deren innerer Ringschulter und der rückwärtigen Abstützfläche des Anschlußnippels noch einen Druckring eines gegenüber der Einspritzleitung härteren Materials in der Hoffnung vorgesehen, daß dieser Druckring beim Anziehen der Überwurfmutter am Anschlußnippel fest liegen bleiben und lediglich die Überwurfmutter gegenüber dem Druckring verdreht werden würde. Wenn solche Druckringe den Überwurfmuttern auch eine gute harte Auflage bieten und die heute an Einspritzpumpen und Einspritzdüsen üblichen, verhältnismäßig großen Überwurfmuttern auch in Verbindung mit Einspritzleitungen kleineren Außendurchmessers verwendbar machen, so hat die Erfahrung doch gezeigt, daß es beim Anziehen der Überwurfmutter kaum möglich ist, den an deren innerer Ringschulter in der Regel mit einer größeren Fläche als an der rückwärtigen Abstützfläche des Anschlußnippels abgestützten Druckring an einem Mitdrehen mit der Überwurfmutter zu hindern. Dabei verbleibt nicht nur der Mangel eines raschen Verschleißes des Anschlußnippels, sondern die nippelseitige kreisförmige innere Kante des Druckringes kann bei diesen relativen Verdrehungen auch noch zu unerwünschten Einkerbungen der Einspritzleitung an der Anschlußstelle des Anschlußnippels führen und damit das Entstehen dortiger Kerbrisse fördern. Dem Ersatz sogen. Lötdichtkegel (vgl. dag genannte DIN-Blatt), die die Herstellung des Anschlußnippels verteuern und wegen der Lötrückstände die Funktionssicherheit gefährden, durch angestauchte Anschlußnippel stand der neue Mangel gegenüber, daß das Anstauchen eines Nippels in der sonst außerordentlich glatten inneren Oberfläche der Leitung (mit einer Rauhtiefe von nur 3 bis 5 $\mu$) zu einer den inneren Leitungsquerschnitt aufweitenden Quetschfalte führt, die ihrerseits zu einer dortigen Verschmutzung und einer Störung des Motorbetriebes durch Kavitation führen kann.

Bei einer der Gattung des Patentanspruchs 1 entsprechenden Einspritzleitungsverbindung gemäß der US-A- 2 150 524 hat man ein Mitdrehen des Druckringes beim Anziehen der Überwurfmutter dadurch ausgeschlossen, daß man den Druckring mit dem an die Einspritzleitung angestauchten Anschlußnippel und dem daran anschließenden Teil der Einspritzleitung durch einen Preßsitz fest verbunden hat. Aber auch die letztgenannten Druckanschlüsse und ähnliche Druckanschlüsse mit ebenfalls angestauchten sogen. Kugelnippeln (vgl. DE-A-1 937 975 nebst Zusatz 2 138 043) blieben nicht nur wegen der durch das Anstauchen hervorgerufenen Quetschfalte, sondern auch noch aus folgenden Gründen unbefriedigend:

Für das Anstauchen des Kugelnippels sind Einspritzleitungen mit einer ausreichenden Wandstärke erforderlich, da sonst für das Anstauchen zu wenig Material zur Verfügung steht. Bei den heute üblichen, auch für höchste Einspritzdrücke von Dieselmotoren geeigneten Einspritzleitungen sind Außendurchmesser D von 6 mm und Wandstärken s von 2 mm üblich, womit für das Anstauchen geeigneter Kugelnippel ausreichend Material zur Verfügung steht. Indessen hat sich gezeigt, daß für zahlreiche andere Arten von Verbrennungskraftmaschinen, beispielsweise für Motoren mit Benzineinspritzung und sogen. Vorkammer-Dieselmotoren für Personenkraftwagen, niedrigere Einspritzdrücke ausreichen und somit auch Einspritzleitungen mit geringeren Wandstärken ausreichen würden, wenn dann auch noch genügend Material für einen angeformten Anschlußnippel zur Verfügung stehen würde. Man könnte dann statt des vorgenannten Verhältnisses D:s = 3:1 solche Verhältnisse von 3,5:1 und bei Einspritzleitungen für noch niedrigere Drücke, wie sie beim Benzineinspritzen in den Saughub eines Arbeitszylinders einer Verbrennungskraftmaschine auftreten, solche bis zu etwa 5:1 wählen. Mit einer Vergrößerung dieses Verhältnisses lassen sich die Einspritzleitungen trotz gleichbleibenden lichten Querschnitte einfacher und billiger herstellen und sind wegen ihrer entsprechend größeren Flexibilität bei den betriebemäßigen Schwingungsbeanspruchungen zugleich weniger bruchgefährdet. Die bessere Aufnahme von Schwingungen ermöglicht auch eine Verringerung des bei heute üblichen Einspritzleitungen erforderlichen Dämpfungsaufwandes, während die größere Flexibilität auch noch die Einstellung des Einspritzzeitpunktes der Einspritzpumpe durch deren einfaches Verdrehen erleichtert. Schließlich ermöglicht die größere Flexibilität der dünneren Einspritzleitung auch eine geringere Biegegenauigkeit bei deren Verlegung zwischen der Einspritzpumpe und der zugeordneten Einspritzdüse der Brennkraftmaschine.

Durch die FR-A- 1 123 749 sind auch schon solche Druckanschlüsse von Einspritzleitungen mit einerseits an einer inneren ebenen Ringschulter einer Überwurfmutter abgestützten Druckringen bekanntgeworden, die mittels nippelseitig erweiterter konischer Öffnungen an entsprechend konisch verjüngten rückwärtigen Abstützflächen der zugeordneten Anschlußnippel abgestützt sind. Man hat es hierbei in der Hand, der Kerbrißgefahr an der Anschlußstelle des Anschlußnippels an der Einspritzleitung dadurch zu begegnen, daß man im Druckring und an der rückwärtigen Abstützfläche des Anschlußnippels entsprechend kleine Konuswinkel von beispielsweise 30° anwendet. Abgesehen davon, daß im Falle eines Anstauchens dieser Anschlußnippel ebenfalls eine nachteilige innere Quetschfalte entsteht, werden beim Anziehen der Überwurfmutter über solche Konusflächen so große Einschnürkräfte auf den Nippel ausgeübt, daß bei fest angezogener Überwurfmutter hier zumindest dann mit einer Einschnürung des inneren Leitungsquerschnittes und mit einer entsprechenden Beeinträchtigung der Einspritzung und des Motorbetriebes und damit auch mit einer schlechteren Abgasqualität gerechnet werden muß, wenn nach vorstehendem Einspritzleitungen mit kleinerer Wandstärke verwendet werden.

Schließlich ist allen Druckanschlüssen von Einspritzleitungen, die mit einer durch deren Ablängung gebildeten Stirnfläche eines Anschlußnippels in den konischen Aufnahmeraum des Anschlußstutzens hineinragen, der Mangel gemeinsam, daß an dieser Stirnfläche kaum eine so saubere und glatte Oberfläche wie in der Einspritzleitung selbst geschaffen werden kann und deshalb auch an dieser Stelle damit gerechnet werden muß, daß dortige kleinste, von der Abtrennung zurückgebliebene Teilchen während des Betriebes der Brennkraftmaschine abgelöst werden und in den außerordentlich empfindlichen Einspritzventilen zu Störungen führen.

Der Erfindung liegt, ausgehend von der Gattung des Patentanspruchs 1 die Aufgabe zugrunde, die Einspritzleitungsverbindung samt ihren Druckanschlüssen so zu vervollkommen, daß nach Möglichkeit sämtliche vorgenannten Mängel vermieden werden und eine zuverlässige Festlegung und Abdichtung der Einspritzleitungen über einen am Innenkonus jedes Anschlußstutzens abgestützten Anschlußnippel trotz Vermeidung innerer Quetschfalten und ohne die Gefahr einer Einschnürung der Einspritzleitung an der Festlegungsstelle sowie auch ohne die Gefahr einer späteren Verunreinigung des geförderten Kraftstoffs durch von der Einspritzleitung abgelöste Schmutz- oder Materialteilchen gewährleistet werden kann.

Die gestellte Aufgabe ist erfindungsgemäß, ausgehend von der Gattung des Patentanspruchs 1 durch die in dessen kennzeichnendem Teil wiedergegebenen Merkmale gelöst, von denen die ersten beiden an sich bekannt sind.

Es hat sich überraschend gezeigt, daß das an sich durch die GB-A- 1756/1912 bei dünnen Druckleitungen für entsprechend geringe Überdrücke bekannte äußere Umbördeln eines mit einem Stützansatz versehenen Druckringes auch bei heute üblichen, selbst hohen Drücken bis über 500 bar standhaltenden Einspritzleitungen mit Wandstärken im Bereich 1/5 bis 1/3 ihres Außendurchmessers, wie sie beißpielsweise durch die GB-A- 460.763 bekannt sind, ohne Rißbildungen im Leitungsmaterial zuverlässig möglich ist und in Verbindung mit üblichen Anschlußstutzen auch zu hohe Betriebsdrücke zuverlässig abdichtenden Druckanschlüssen führt, wenn die weiteren Merkmale des vorgenannten Patentanspruchs 1 erfüllt sind.

Die GB-A- 1756/1912 offenbart im Verhältnis zu ihrer lichten weite sehr dünne Druckleitungen in Verbindung mit kegelförmigen Außenflächen von Stützansätzen an Druckringen, die einen nur kleinen Kegelwinkel im Bereich von 30 bis 45° aufweisen. Die Folge sind verhältnismäßig lange und im Querschnitt dünne Stützansätze, die beim Anziehen einer Überwurfmutter keinen größeren Einschnürungskräften standhalten können. Dabei sind diese Druckanschlüsse vor allem für Rohrleitungen in Verbindung mit Dampfkesseln bestimmt, wo an den Anschlußstellen auch Rücksicht auf Temperaturdehnungen der Rohrleitungen genommen werden muß. Infolgedessen ist hier sogar eine gewisse Elastizität der Druckringe erwünscht, damit im Falle einer Temperaturdehnung des Druckrohres eine gewisse axiale Verschiebung des Anchlußnippels im Innenkonus des Anschlußstutzens möglich ist, dessen Innenkonus zu diesem Zweck beispielsweise nur einen Kegelwinkel von 30° aufweist. Wenn sich die offenbarten Druckleitungen mit einem Verhältnis ihrer Außendurchmesser zu ihrer Wandstärke von etwa 10:1 auch ohne weiteres um einen Stützansatz eines Druckringes nach außen umbördeln lassen, so sind die in der Patentschrift offenbarten Druckanschlüsse doch an Einspritzleitungen von Einspritzsystemen üblicher Einspritzdrücke bis über 500 bar völlig ungeeignet und würden niemals zu einem brauchbaren dichten Druckanschluß führen. Es ist deshalb verständlich, daß die Fachwelt durch diesen Stand der Technik trotz des bereits seit über 50 Jahren bestehenden Problems der Schaffung geeigneter, hoch beanspruchter Druckanschlüsse von Einspritzleitungen keine Anregung zur nunmehrigen Erfindung erhalten konnte.

Demgegenüber gewährleistet einerseits die im Verhältnis zu der vom Einspritzdruck beaufschlagten, dem Außendurchmesser der Einspritzleitung proportionalen Fläche kräftige Bemessung der Druckringe und Stützansätze und anderseits die verhältnismäßig sehr kurze Bemessung der letzteren, daß bei der erfindungsgemäßen Einspritzleitungsverbindung trotz der am Dichtkegel jedes Anschlußnippels und damit auch an jedem Stützansatz wirksamen Einschnürungskraft an den Anschlußnippeln keine Einschnürung verursacht werden kann. Durch das Herumbördeln des Leitungsmaterials um den Stützansatz entsteht zugleich eine so große keilähnliche Abstützfläche des Stützringes an der Einspritzleitung mit einem so großen mittleren Durchmesser, daß beim Anziehen der Überwurfmutter kein Mitdrehen des Druckringes mit der Überwurfmutter mehr befürchtet zu werden braucht. Die von der Ansatzstelle der äußeren Umfangsfläche des Stützansatzes vorstehende Stirnfläche ermöglicht eine zuverlässige Begrenzung des beim Aufschrauben der Überwurfmutter zuzulassenden Drehmomentes, wenn der beim Anziehen dieser Mutter plastisch verformte umgebördelte Rand der Einspritzleitung sich dort abstützt. Vorteilhaft ist auch, daß alle Dichtflächen des Anschlußnippels der Einspritzleitung von deren innerer Oberfläche gebildet werden, die nach vorstehendem besonders glatt ist und die Gefahr einer Verunreinigung des Kraftstoffs gegenüber heute üblichen Anschlußnippeln verringert. Auch nachträglich lassen sich damit die vorgeschlagenen Anschlußnippel besser als die heute üblichen Anschlußnippel reinigen, weil die die Innenoberflächen aufrauhenden Quetschfalten vermieden werden.

Die FR-A- 712.765 offenbart zwar bereits eine Anschlußstelle einer Kraftstoffleitung, bei der der Außendurchmesser eines Druckringes etwa das 1,8-Fache des Außendurchmessers einer anschließenden Kraftstoffleitung beträgt und bei der ein Stützansatz des Druckringes eine mehr als 1/4 des Außendurchmessers der Kraftstoffleitung betragende Wandstärke aufweist. Indessen handelt es sich um eine ausgesprochene Niederdruck-Förderleitung mit einer Wandstärke, die weniger als 1/10 ihres Außendurchmessers beträgt, wobei die nippelseitige Abrundung des Stützansatzes mit einem entsprechend großen Krümmungsradius bis an die Wurzel des Stützansatzes reicht, so daß auch der Anschlußnippel eine entsprechend rund ausgebildete Dichtfläche benötigt. Selbst wenn die zugeordneten runden Dichtflächen in einer aufwendigen Fertigung sehr maßgenau hergestellt werden, so könnte ein solcher Anschluß doch selbst in Verbindung mit dickwandigeren Kraftstoffleitungen niemals gegenüber einem Kraftstoffdruck in einem Bereich zwischen 500 und etwa 1400 bar zuverlässig abdichten.

Die Erfindung umfaßt auch ein vorteilhaftes Verfahren zum Herstellen der Anschlußnippel einer Einspritzleitung der erfindungsgemäßen Einspritzleitungsverbindung, das im Patentanspruch 10 gekennzeichnet ist. Durch die Weiterverwendung der Matrize der zum Umbördeln des freien Endes der Einspritzleitung benötigten Preßvorrichtung als zugeordneten, mit der Einspritzleitung fest verbunden bleibenden Druckring ergibt sich der erwünschte feste Preßsitz des Druckringes an der Einspritzleitung bereits beim Umbördeln von deren freiem Ende und es kann überdies auf eine gesonderte Matrize verzichtet werden, die bei dem erforderlichen häufigen Einsatz der Preßvorrichtung einer unvermeidlichen Abnutzung unterliegen würde und somit oft erneuert werden müßte.

Die US-A- 2 150 524 offenbart zwar ein ähnliches mehrstufiges Verfahren, das aber lediglich zum axialen Anstauchen von Anschlußnippeln dient und schon wegen der dort sehr dickwandigen Einspritzleitung keine Anregung zu einem Umbördeln eines im übrigen ganz anders gestalteten Druckringes geben konnte.

Andere vorteilhafte Ausgestaltungen der Erfindung sind in weiteren gegenständlichen Ansprüchen und weiteren Verfahrensansprüchen gekennzeichnet.

In der Zeichnung ist die Erfindung beispielsweise veranschaulicht; es zeigen:
Fig. 1 eine Ausführungsform der Einspritzleitungsverbindung an der Stelle eines Druckanschlusses in einem vergrößert dargestellten Axialschnitt;
Fig. 2 die Preßwerkzeuge einer das Ende einer Kraftstoff-Einspritzleitung gemäß Fig. 1 zu dessen Aufbördelung aufnehmenden Preßvorrichtung nach Ausführung eines ersten Arbeitsganges zum Aufbördeln des Leitungsendes (in einer gegenüber Fig. 1 weniger vergrößerten Seitenansicht, teilweise im Axialschnitt);

Fig. 3 die Preßvorrichtung in einer gleichen Darstellung, jedoch mit einem als Matrize eingesetzten Druckring nach Durchführung eines zweiten Arbeitsganges;

Fig. 4 dieselbe Preßvorrichtung nach Durchführung eines dritten Arbeitsganges und damit nach Fertigstellung des um den Druckring herumgebördelten Anschlußnippels.

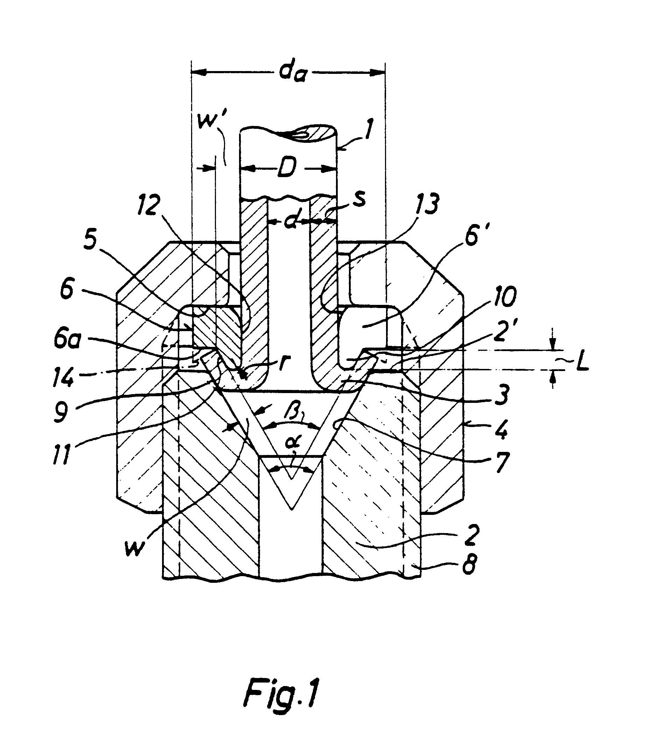

Die in Fig. 1 dargestellte Einspritzleitungsverbindung einer im übrigen üblichen und deshalb nicht näher dargestellten Ausführung zur Verbindung eines Druckanschlusses einer Kraftstoff-Einspritzpumpe eines Vorkammer-Dieselmotors mit einer zugeordneten, an dessen Arbeitszylindern befindlichen Einspritzdüse weist eine Einspritzleitung 1 mit einem Außendurchmesser D von 4,0 mm, einer Wandstärke s von 1,0 mm und damit einer lichten Weite d von 2 mm auf, die an ihren beiden Enden über je einen in Fig. 1 näher dargestellten Druckanschluß mit einem Anschlußstutzen 2 einerseits an die Einspritzpumpe und anderseits an die Einspritzdüse angeschlossen ist. Da weder die Einspritzpumpe noch die Einspritzdüse Gegenstand der vorliegenden Erfindung ist und beide irgendeiner allgemein üblichen Ausführung entsprechen können, erübrigt sich hier deren Darstellung und nähere Beschreibung.

Das anschlußseitige Ende der Einspritzleitung 1 bildet einen nachstehend näher erläuterten Anschlußnippel 3, der von einer Überwurfmutter 4 her über einen einerseits an einer inneren ebenen Ringschulter 5 derselben und anderseits an einer rückwärtigen Abstützfläche des Anschlußnippels 3 abgestützten Druckring 6 eines gegenüber der Einspritzleitung 1 härteren Materials gegen einen Innenkonus 7 des die Überwurfmutter 4 an einem entsprechenden Außengewinde 8 aufnehmenden Anschlußstutzens 2 mit einem dem Konuswinkel α von 60° des Innenkonus 7 angepaßten Dichtkegel 9 abdichtend und zugleich fluchtend angepreßt ist, wobei der Druckring 6 den Anschlußstutzen 2 radial noch über dessen Konusöffnung hinaus überdeckt.

Der Druckring 6 besteht aus einem abgelängten und zu dem Ring unter Bildung einer Trennstelle 6' eingerollten Profilband und ist mit dem Anschlußnippel 3 durch einen Preßsitz fest verbunden und sein Außendurchmesser $d_a$ beträgt etwa das Zweifache des Außendurchmessers D der Einspritzleitung 1. Er ist mit einem nippelseitigen ringförmigen Stützansatz 10 versehen, dessen nippelseitiger Rand im Ringquerschnitt mit einem Radius r von etwa 0,5 mm abgerundet ist. Außerdem weist der Stützansatz 10 von seiner Wurzel aus eine kegelförmig verjüngte äußere Umfangsfläche 11 auf, deren Kegelwinkel β im Bereich des Konuswinkels α des Innenkonus 7 des Anschlußstutzens 2 liegt.

Wie ersichtlich, besteht der Anschlußnippel 3 aus dem um den Stützansatz 10 nach außen herumgebördelten und an seiner Außenseite zugleich den Dichtkegel 9 bildenden freien Ende der Einspritzleitung 1. Dabei weist jeder Stützansatz 10, gemessen vom wurzelseitigen Ende des ihn umschließenden Bereichs der Einspritzleitung 1 aus eine im Bereich der Wandstärke s der Einspritzleitung 1 liegende axiale Länge L und eine etwa 1/4 des Außendurchmessers D der Einspritzleitung 1 betragende Wandstärke w' auf.

Die Bohrung 12 des Druckringes 6 weist an ihrem dem Stützansatz 10 gegenüberliegenden Ende eine trompetenförmige Erweiterung 13 auf, die verhindert, daß die dort aus dem Druckring 6 nach hinten ausstretende Einspritzleitung 1 bei den betriebsmäßig auftretenden Schwingungen an einer dortigen scharfen Kante der Austrittsöffnung der Bohrung 12 Einkerbungen und Schwingungsbrüche erfahren könnte. Außerdem weist der nach außen um den Stützansatz 10 herumgebördelte Endteil der Einspritzleitung 1 eine gegenüber deren Wandstärke s kleinere Wandstärke w auf.

Während eine in Fig. 1 strichpunktiert angedeutete, von der Wurzel und zugleich der Ansatzstelle der äußeren Umfangsfläche 11 des Stützansatzes 10 im Ringquerschnitt rechtwinklig nach außen vorstehende hohlkegelförmige Anschlagschulter 14 durch das dortige Anliegen des umgebördelten Randes der Einspritzleitung 1 eine zuverlässige Begrenzung des beim Aufschrauben der Überwurfmutter 4 zuzulassenden Drehmomentes ermöglicht, dient dazu bei einer entsprechend langen Bemessung des zur Bildung des Anschlußnippels 3 verwendeten Endes der Einspritzleitung 1 das über den Stützansatz 10 hinaus entlang einer von der Ansatzstelle der Umfangsfläche 11 nach außen anschließenden ebenen Ringschulter 6a nach außen verformte Material der Einspritzleitung 1, welches dann dort den äußeren Rand des Anschlußnippels 3 bildet. Wenn bei einer solchen Ausbildung des Anschlußnippels 3 die Überwurfmutter 4 angezogen wird, dann stützt sich schließlich die äußere Stirnfläche 2' des Anschlußstutzens 2 an diesem kreisringförmigen äußeren Rand des Anschlußnippels 3 ab, wonach einem etwaigen weiteren Anziehen der Überwurfmutter 4 ein plötzlich vergrößerter Widerstand entgegenwirkt, der oberhalb eines beispielsweise an einem Drehmomentschlüssel eingestellten zulässigen Drehmoments liegt.

Der eine große Wandstärke bewirkende Außendurchmesser $d_a$ des Druckringes 6, der in der Ausnehmung der Überwurfmutter 4 etwa bis zum Dreifachen des Außendurchmessers D der Einspritzleitung 1 betragen könnte, und die ebenfalls große wurzelseitige Wandstärke w' des Stützansatzes 10, die am wurzelseitigen Ende ihrer vom umgebördelten Leitungsende umschlossenen äußeren Umfangsfläche 11 etwa 1/4 des Außendurchmessers D der Einspritzleitung 1 beträgt und auch noch größer sein könnte, sind im Verein mit der verhältnismäßig kurzen, im Bereich der Wandstärke s der Einspritzleitung 1 liegenden axialen Länge L des Stützansatzes 10 deshalb wesentlich, weil der in der Einspritzleitung auftretende hohe Betriebsdruck (bis über 500 bar) und die Betriebsschwingungen von Brennkraftmaschinen an den hier betroffenen Druckanschlüssen erhebliche axiale Anzugskräfte erforderlich machen, um beim Betrieb eine zuverlässige Dichtheit zu gewährleisten. Schwächer bemessene Druckringe und schwächere und/oder längere Stützansätze würden bei diesen Drücken, die ohnehin schon am äußeren Dichtkegel 9 des Anschlußnippels 3 zu einer plastischen Materialverformung führen können, zu einer axialen Einschnürung des Stützansatzes 10 und sogar des Druckringes 6 selbst und damit auch zu einer Einschnürung der Einspritzleitung 1 führen, was wegen der dadurch verursachten Störung des Einspritzvorganges keinesfalls zugelassen werden kann. Die beschriebene Gestaltung des Druckringes 6 nebst Stützansatz 10 und des Anschlußnippels 3 gewährleisten demgegenüber, daß der Druckanschluß wiederholt unter einwandfreier Abdichtung verwendet und die Überwurfmutter 4 hierbei auch mit zu hohem Drehmoment angezogen werden kann, ohne daß eine Einschnürung der Einspritzleitung 1 und damit eine Verkleinerung ihres Innendurchmessers d befürchtet zu werden braucht.

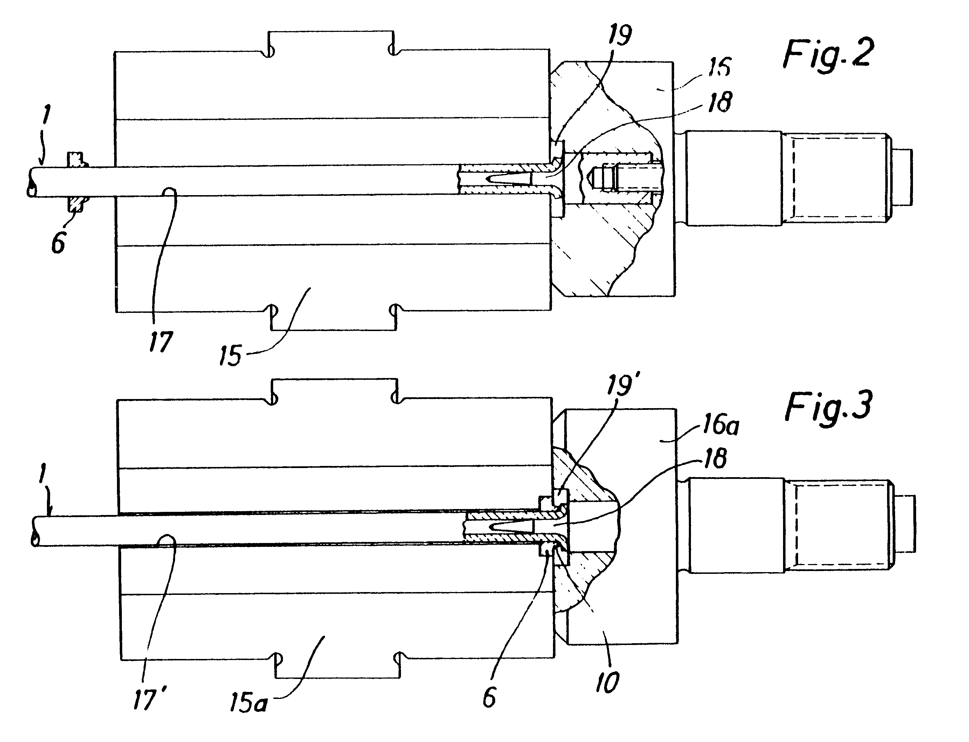

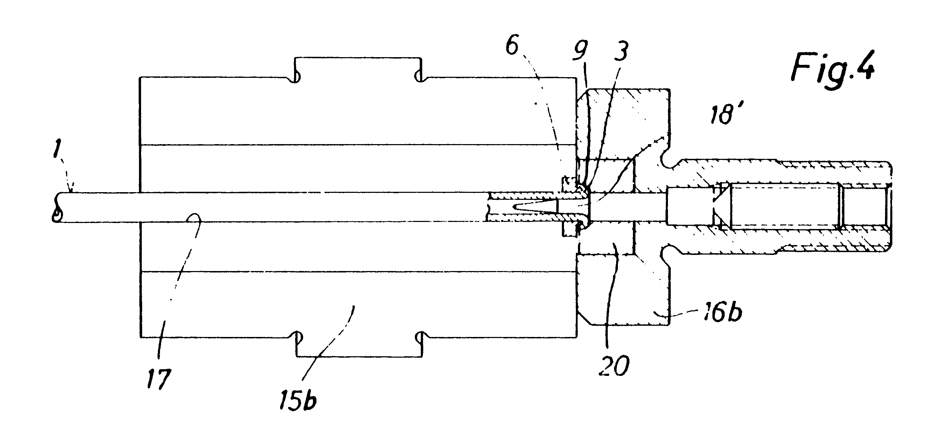

In den Fig. 2 bis 4 ist eine bevorzugte Herstellungsweise des Anschlußnippels 3 gemäß Fig. 1 mittels einer Preßvorrichtung in drei Arbeitsgängen veranschaulicht, wonach eine beim zweiten und dritten Arbeitsgang zum Umbördeln des Endes der Einspritzleitung 1 dienende Matrize beim dritten Arbeitsgang so fest mit dem um ihren Stützansatz 10 herumgebördelten Ende der Einspritzleitung 1 zusammengepreßt wird, daß sie nunmehr jeweils als verlorenes Werkzeug an der Einspritzleitung 1 verbleibt und dort den fest mit dem Anschlußnippel 3 verbunden bleibenden Druckring 6 bildet.

Das Preßwerkzeug weist für die drei Arbeitsgänge unterschiedliche, jeweils aus zwei Halbschalen bestehende Matrizenteile 15, 15a und 15b und auch unterschiedliche Preßstempel 16, 16a und 16b auf. Während der Matrizenteil 15 für den ersten Arbeitsgang lediglich eine die Einspritzleitung 1 zugleich einspannend aufnehmende Bohrung 17 benötigt, ist der für den ersten Arbeitsgang erforderliche Preßstempel 16 nicht nur mit einem an seinem Fuß entsprechend der Aufbördelung der Einspritzleitung 1 abgerundeten Dorn 18 versehen, der nach dem Preßvorgang noch verhältnismäßig tief in die Einspritzleitung 1 eindringt, sondern auch noch mit einer die Aufnahme des aufgebördelten Leitungsendes zulassenden Ausnehmung 19.

Der zur Durchführung des zweiten Arbeitsganges dienende Matrizenteil 15a nimmt in einer stempelseitigen Erweiterung seiner die Einspritzleitung 1 mit einem Spiel aufnehmenden Bohrung 17' einen als Matrize dienenden Druckring 6 auf, der gemäß Fig. 2 schon vor Beginn des Aufbördelns auf die Einspritzleitung 1 aufgereiht wurde und nunmehr an das aufgebördelte Leitungsende herangeschoben ist und mit seinem Stützansatz 10 aus dem Matrizenteil 15a in der ersichtlichen Weise stempelseitig vorragt. Der Preßstempel 16a weist hier um den Dorn 18 herum eine gegenüber der Ausnehmung 19 des Preßstempels 16 um die axiale Länge des Stützansatzes 10 tiefere Ausnehmung 19' auf, damit am Ende des hier vorgesehenen Anpreßvorganges und damit beim Aufsitzen der Stirnfläche des Preßstempels 16a auf der Gegenfläche des Matrizenteils 15a das aufgebördelte Ende der Einspritzleitung 1 gerade fest gegen das freie Ende des Stützansatzes 10 gepreßt wird. Dabei dient das Spiel zwischen der Bohrung 17' und der Einspritzleitung 1 dazu, der letzteren beim Preßvorgang die Möglichkeit einer entsprechenden axialen Verschiebung zu geben.

Der Matrizenteil 15b zum Durchführen des dritten Arbeitsganges nimmt die Einspritzleitung 1 nebst Druckring 6 wiederum spielfrei auf, damit bei diesem stärksten Preßvorgang kein Material der Einspritzleitung 1 hinter dem Druckring 6 nach außen ausweichen kann. Der Preßstempel 16b weist hier an seiner Stirnseite um einen etwas geänderten Dorn 18' herum einen dem Innenkonus 7 eines Anschlußstutzens 2 entsprechend ausgenommenen Einsatz 20 auf, so daß der umgebördelte Teil der Einspritzleitung 1 am Ende dieses Arbeitsganges an seiner Außenfläche zugleich einen dem Innenkonus 7 angeglichenen Dichtkegel 9 bildet.

Bei dem dargestellten Ausführungsbeispiel beträgt das Verhältnis D:s der Einspritzleitung etwa 4:1, obgleich dieses Verhältnis entsprechend den jeweiligen Erfordernissen auch im Bereich von 3:1 bis 5:1 liegen könnte. Auch könnte der Außendurchmesser $d_a$ des Druckringes im Bereich zwischen dem etwa 1,8-fachen und dem etwa Dreifachen des Außendurchmessers D der Einspritzleitung 1 liegen.

Weiterhin könnte der bei dem Ausführungsbeispiel mit etwa 0,5 mm angegebene Radius r des nippelseitigen Randes des Stützansatzes 10 in einem Bereich von etwa dem 0,2 bis 0,4-fachen Wert der Wandstärke s der Einspritzleitung 1 liegen, wie es im Rahmen der Erfindung auch möglich ist, den Druckring 6 statt aus einem abgelängten und mittels einer Vorrichtung zu dem Ring unter Bildung einer Trennstelle eingerollten Profilband spangebend oder spanlos als nahtlos geschlossenen Ring herzustellen, und zwar entweder als Drehteil aus dem Vollen zu drehen oder als Kaltpreßteil aus Draht im Vollen kaltgepreßt herzustellen. Wenn sich die gegenüber der Wandstärke s der Einspritzleitung 1 kleinere Wandstärke w des um den Stützansatz 10 herumgebördelten Endteiles dieser Leitung bei dem beschriebenen Umbördeln auch schon von selbst ergeben kann, so ist die Erfindung doch nicht an die dargestellten Wandstärkenverminderungen des genannten Endteiles gebunden. Weiterhin umfaßt die Erfindung auch Einspritzleitungen mit größeren Durchmessern als 4,0 mm, soweit sie zur Kraftstoffeinspritzung bei Verbrennungskraftmaschinen geeignet sind.

Es ist auch nicht unbedingt erforderlich eine Preßsitzverbindung des Druckringes 6 mit der Einspritzleitung 1 vorzusehen. Wenn eine solche Verbindung auch bevorzugt wird, um beim Anziehen der Überwurfmutter 4 ein Mitdrehen des Druckringes 6 - und damit Verschleißerscheinungen an der Einspritzleitung 1- zuverlässig zu verhindern, so ergibt sich doch schon durch die kegelförmige Umfangsfläche 11 des Stützansatzes 10 eine so große äußere Abstützfläche des Druckringes 6 am Anschlußnippel 3, daß in der Regel auch ohne Preßsitz kein Mitdrehen des Druckringes 6 mit der Überwurfmutter 4 befürchtet zu werden braucht.

## Patentansprüche

1. Einspritzleitungsverbindung für Verbrennungskraftmaschinen mit einem an mindestens einem Ende der Einspritzleitung (1) befindlichen Druckanschluß und je Druckanschluß einem aus dem Material der Einspritzleitung geformten Anschlußnippel (3), der von einer Überwurfmutter (4) her über einen axial einerseits an einer inneren ebenen Ringschulter (5) derselben und axial anderseits an einer rückwärtigen Abstützfläche des Anschlußnippels (3) abgestützten sowie innen an der Einspritzleitung (1) wenigstens anliegenden Druckring (6) eines gegenüber der Einspritzleitung härteren Materials gegen einen Innenkonus (7) eines die Überwurfmutter (4) an einem entsprechenden Außengewinde (8) aufnehmenden Anschlußstutzens (2) mit einem dem Konuswinkel des Innenkonus (7) im Bereich von 60° angepaßten Dichtkegel (9) abdichtend und zugleich fluchtend anpreßbar ist, wobei der Druckring (6) den Anschlußstutzen (2) noch über dessen Konusöffnung hinaus überdeckt, gekennzeichnet durch folgende Merkmale:
   a) Die Einspritzleitung (1) weist eine Wandstärke (s) im Bereich von 1/5 bis 1/3 ihres Außendurchmessers (D) auf;
   b) jeder Druckring (6) ist nippelseitig mit einem ringförmigen Stützansatz (10) versehen, der einen am nippelseitigen Rand abgerundeten Ringquerschnitt und entlang seinem Außenumfang eine kegelförmig verjüngte äußere Umfangsfläche (11) mit einem Kegelwinkel (β) im Bereich des Konuswinkels (α) des Innenkonus (7)

des zugeordneten Anschlußstutzens (2) aufweist, während der zugeordnete Anschlußnippel (3) aus dem um den Stützansatz (10) nach außen auf dessen Umfangsfläche (11) herumgebördelten und mit seinem Außenumfang zugleich den Dichtkegel (9) bildenden freien Ende der zugeordneten Einspritzleitung (1) besteht;
   c) der größte Außendurchmesser (d$_a$) jedes Druckringes (6) beträgt etwa das 1,8- bis Dreifache des Außendurchmessers (D) der zugeordneten Einspritzleitung (1);
   d) jeder Stützansatz (10) weist, gemessen vom wurzelseitigen Ende des ihn umschließenden Bereichs der Einspritzleitung (1) aus eine im Bereich der Wandstärke (s) der Einspritzleitung (1) liegende axiale Länge (L) und eine mindestens etwa 1/4 des Außendurchmessers (D) der Einspritzleitung (1) betragende Wandstärke (w') auf.
   e) der Druckring (6) bildet an der Ansatzstelle der Umfangsfläche (11) um den Stützansatz (10) herum eine nach außen verstehende Stirnfläche (6a bzw. 14), an der das freie Ende der Einspritzleitung (1) bei hergestelltem Druckanschluß abgestützt ist.

2. Einspritzleitungsverbindung nach Anspruch 1, dadurch gekennzeichnet, daß jeder Druckring (6) mit dem zugeordneten Anschlußnippel (3) und dem daran anschließenden Teil der Einspritzleitung (1) durch einen Preßsitz fest verbunden ist.

3. Einspritzleitungsverbindung nach Anspruch 1 oder 2, dadurch gekennzeichnet, daß die Bohrung (12) jedes Druckringes (6) an ihrem dem Stützansatz (10) gegenüberliegenden Ende eine trompetenförmige Erweiterung (13) aufweist.

4. Einspritzleitungsverbindung nach einem der vorhergehenden Ansprüche, dadurch gekennzeichnet, daß der nippelseitige Rand jedes Stützansatzes (10) mit einem Radius (r) abgerundet ist, der etwa dem 0,2 bis 0,4-fachen Wert der Wandstärke (s) der zugeordneten Einspritzleitung (1) entspricht.

5. Einspritzleitungsverbindung nach einem der vorhergehenden Ansprüche, dadurch gekennzeichnet, daß der nach außen um den Stützansatz (10) des zugeordneten Druckringes (6) herumgebördelte Endteil jeder Einspritzleitung (1) eine gegenüber deren Wandstärke (s) kleinere Wandstärke (w) aufweist.

6. Einspritzleitungsverbindung nach einem der Ansprüche 1 bis 4, dadurch gekennzeichnet, daß der nach außen um den Stützansatz (10) des zugeordneten Druckringes (6) herumgebördelte Endteil jeder Einspritzleitung (1) eine deren Wandstärke (s) gleichende Wandstärke aufweist.

7. Einspritzleitungsverbindung nach einem der vorhergehenden Ansprüche, dadurch gekennzeichnet, daß jeder Druckring (6) nippelseitig eine von der Ansatzstelle der äußeren Umfangsfläche (11) seines Stützansatzes (10) nach außen anschließende ebene Ringschulter (6a) aufweist.

8. Einspritzleitungsverbindung nach einem der Ansprüche 1 bis 6, dadurch gekennzeichnet, daß jeder Druckring (6) eine von der Ansatzstelle der äußeren Umfangsfläche (11) seines Stützansatzes (10) im Ringquerschnitt rechtwinklig zur kegeligen Umfangsfläche (11) nach außen vorstehende hohlkegelförmige Anschlagschulter (14) aufweist.

9. Einspritzleitungsverbindung nach einem der vorhergehenden Ansprüche, dadurch gekennzeichnet, daß jeder Druckring (6) aus einem abgelängten und zu dem Ring unter Bildung einer Trennstelle (6') eingerollten Profilbandteil besteht.

10. Verfahren zum Herstellen eines Anschlußnippels der Einspritzleitungsverbindung gemäß Anspruch 2 und gegebenenfalls einem oder mehreren der Ansprüche 3 bis 9, dadurch gekennzeichnet, daß das freie Ende der Einspritzleitung (1) um den zugleich eine verlorene Matrize des Preßwerkzeuges bildenden Druckring (6) unter Bildung des Preßsitzes herumgebördelt wird.

11. Verfahren nach Anspruch 10, dadurch gekennzeichnet, daß das Aufbördeln des Endes der Einspritzleitung (1) und das Umbördeln dieses Rohrleitungsendes um den Druckring (6) in drei Arbeitsgängen mit drei aufeinanderfolgend jeweils mit einem Dorn (18) in das Ende der Einspritzleitung (1) hineinbewegten Preßstempeln (16, 16a, 16b) erfolgt.

12. Verfahren nach Anspruch 10 oder 11, dadurch gekennzeichnet, daß der Druckring (6) in spangebender Fertigung hergestellt wird.

13. Verfahren nach Anspruch 10 oder 11, dadurch gekennzeichnet, daß der Druckring (6) in spanloser Fertigung hergestellt wird.

14. Verfahren nach Anspruch 13, dadurch gekennzeichnet, daß der Druckring (6) aus einem Profilband abgelängt und zu dem Ring unter Bildung einer Trennstelle eingerollt wird.

## Claims

1. An injection line connection for internal combustion engines with a pressure connection at least at one end of the injection line (1) and, for each pressure connection, a connecting fitting (3) which is formed from the material of the injection line and which can be sealingly and at the same time alignedly pressed by a cap nut (4), by way of a pressure ring (6) which is of a material that is harder than the injection line and which is supported axially on the one hand against an inner flat annular shoulder (5) of the cap nut (4) and axially on the other hand against a rearward contact surface of the connecting fitting (3) and which at least bears inwardly against the injection line (1), against an internal taper portion (7) of a connecting member (2) which carries the cap nut (4) on a corresponding male screwthread (8), with a sealing taper portion (9) adapted to the taper angle of the internal taper portion (7) in the region of 60°, wherein the pressure ring (6) also extends over the connecting member (2) beyond the taper opening thereof, characterised by the following features:

a) the injection line (1) has a wall thickness (s) in the range of from 1/5 to 1/3 of its outside diameter (D);

b) each ring (6) is provided at the side towards the connecting fitting with an annular support projection (10) which has an annular cross-section that is rounded off at the edge that is towards the connecting fitting and, along its outside periphery, a tapered outer peripheral surface (11) with a taper angle (β) in the range of the taper angle (α) of the internal taper (7) of the associated connecting member (2) while the associated connecting fitting (3) comprises the free end of the associated injection line (1), which is flanged over outwardly around the supporting projection (10) on the peripheral surface (11) thereof and which with its outer periphery at the same time forms the sealing taper (9);

c) the largest diameter $(d_a)$ of each ring (6) is about 1.8 to three times the outside diameter (D) of the associated injection line (1);

d) each support projection (10), as measured from the root end of the region therearound of the injection line (1), is of an axial length (L) that is in the region of the wall thickness (s) of the injection line (1) and a wall thickness (w') that is at least about 1/4 of the outside diameter (D) of the injection line (1);

e) the pressure ring (6) forms at the point of origin of the peripheral surface (11) around the support projection (10) an annular front surface (6a resp. 14), at which abuts the free end of the injection line (1) at established pressure connection.

2. An injection line connection according to claim 1 characterised in that each ring (6) is fixedly connected by a press fit to the associated connecting fitting (3) and the adjoining portion of the injection line (1).

3. An injection line connection according to claim 1 or claim 2 characterised in that, at its end that is remote from the support projection (10), the bore (12) of each ring (6) has a trumpet-like enlargement portion (13).

4. An injection line connection according to one of the preceding claims characterised in that the edge of each support projection (10), that is towards the connecting fitting, is rounded off with a radius (r) which approximately corresponds to 0.2 to 0.4 times the wall thickness (s) of the associated injection line (1).

5. An injection line connection according to one of the preceding claims characterised in that the end portion of each injection line (1), which is flanged over outwardly about the support projection (10) of the associated ring (6) has a wall thickness (w) that is smaller than the wall thickness (s) of the injection line.

6. An injection line connection according to one of claims 1 to 4 characterised in that the end portion of each injection line (1) which is flanged over outwardly about the support projection (10) of the associated ring (6) has a wall thickness which is equal to the wall thickness (s) of the injection line.

7. An injection line connection according to one of the preceding claims characterised in that, at the side towards the connecting fitting, each ring (6) has a flat annular shoulder (6a) which extends outwardly from the point of origin of the outer peripheral surface (11) of its support projection (10).

8. An injection line connection according to one of claims 1 to 6 characterised in that each ring (6) has a hollow-conical abutment shoulder (14) which projects outwardly in the annular cross-section perpendicularly to the conical peripheral surface (11) from the point of origin of the outer peripheral surface (11) of its support projection (10).

9. An injection line connection according to one of the preceding claims characterised in that each ring (6) comprises a profiled strip portion which is cut to length and rolled to form a ring, forming a gap (6').

10. A process for producing a connecting fitting of the injection line connection according to claim 2 and possibly one or more of claims 3 to 9 characterised in that the free end of the injection line (1) is flanged over around the pressure ring (6) which at the same time forms a lost die of the pressing tool, forming a press fit.

11. A process according to claim 10 characterised in that the operation of flanging the end of the injection line (1) and flanging over said end of the injection line around the ring (6) is carried out in three working operations with three pressing punch members (16, 16a, 16b) which are successively moved with a respective mandrel (18) into the end of the injection line (1).

12. A process according to claim 10 or claim 11 characterised in that the ring (6) is produced by a machining operation.

13. A process according to claim 10 or claim 11 characterised in that the ring (6) is produced by a non-cutting operation.

14. A process according to claim 13 characterised in that the ring (6) is cut to length from a profiled strip and rolled to form the ring, forming a gap.


**Revendications**

1. Raccord pour conduit d'injection pour moteurs à combustion interne, muni d'un raccordement sous pression situé à au moins une extrémité du conduit d'injection (1) et, par raccordement sous pression, d'un embout de raccordement (3) formé de la matière du conduit d'injection, qui peut être poussé de façon étanche et en même temps avec alignement par un écrou à chapeau (4) par l'intermédiaire d'une bague de compression (6) soutenue axialement, d'une part, sur un épaulement annulaire intérieur plan (5) de l'écrou, et axialement, d'autre part, sur une surface postérieure de soutien de l'embout de raccordement (3), et au moins appliquée intérieurement contre le conduit d'injection (1), formée d'une matière plus dure que le conduit d'injection, contre un cône intérieur (7) d'une tubulure de raccordement (2) recevant l'écrou à chapeau (4) sur un filetage extérieur correspondant (8), avec un cône d'étanchéité (9) adapté à l'angle de conicité du cône intérieur (7), de l'ordre de 60°, la bague de compression recouvrant encore la tubulure de raccordement (2) au-delà de son ouverture de cône, caractérisé par les particularités suivantes:

a) le conduit d'injection (1) présente une épaisseur de paroi (s) dans la gamme de 1/5 à 1/3 de son diamètre extérieur (D);

b) chaque bague de compression (6) est munie, du côté de l'embout, d'un appendice annulaire de soutien (10) qui présente une section annulaire arrondie au bord situé du côté de l'embout et le long de sa circonférence extérieure, une surface circonférentielle extérieure (11) rétrécie coniquement, ayant un angle de cône ($\beta$) de l'ordre de grandeur de l'angle de cône ($\alpha$) du cône intérieur (7) de la tubulure de raccordement adjointe (2), tandis que l'embout de raccordement adjoint (3) est formé de l'extrémité libre du conduit d'injection adjoint (1), bordée autour de l'appendice de soutien (10) vers l'extérieur sur la surface circonférentielle (11) de celui-ci, formant en même temps par sa circonférence extérieure le cône d'étanchéité (9);

c) le plus grand diamètre extérieur ($d_a$) de chaque bague de compression (6) représente environ 1,8 à 3 fois le diamètre extérieur (D) du conduit d'injection adjoint (1);

d) chaque appendice de soutien (10) présente, mesurée depuis l'extrémité du côté racine de la région du conduit d'injection (1) qui l'entoure, une longueur axiale (L) se situant dans l'ordre de grandeur de l'épaisseur de paroi (s) du conduit d'injection (1) et une épaisseur de paroi (w') représentant au moins environ 1/4 du diamètre extérieur (D) du conduit d'injection (1);

e) la bague de compression (6) forme, à la naissance de la surface circonférentielle (11), autour de l'appendice de soutien (10), une surface frontale (6a, 14) faisant saillie vers l'extérieur, sur laquelle l'extrémite libre du conduit d'injection (1) est soutenue quand le raccordement sous pression est réalisé.

2. Raccord pour conduit d'injection selon la revendication 1, caractérisé en ce que chaque bague de compression (6) est reliée fermement par un ajustement serré à l'embout de raccordement adjoint (3) et à la partie adjacente du conduit d'injection (1).

3. Raccord pour conduit d'injection selon l'une des revendications 1 et 2, caractérisé en ce que la perforation (12) de chaque bague de compression (6) présente, a son extrémité opposée à l'appendice de soutien (10), un élargissement en forme de trompette (13).

4. Raccord pour conduit d'injection selon l'une des revendications précédentes, caractérisé en ce que le bord de chaque appendice de soutien (10), du côté de l'embout, est arrondi avec un rayon (r) qui correspond à peu près à 0,2 à 0,4 fois l'épaisseur de paroi (s) du conduit d'injection adjoint (1).

5. Raccord pour conduit d'injection selon l'une des revendications précédentes, caractérisé en ce que la partie terminale de chaque conduit d'injection (1), bordée vers l'extérieur autour de l'appendice de soutien (10) de la bague de compression adjointe (6), présente une épaisseur de paroi (w) plus petite que l'épaisseur de paroi (s) du conduit.

6. Raccord pour conduit d'injection selon l'une des revendications 1 à 4, caractérisé en ce que la partie terminale de chaque conduit d'injection (1), bordée vers l'extérieur autour de l'appendice de soutien (10) de la bague de compression adjointe (6) présente une épaisseur de paroi égale à l'épaisseur de paroi (s) du conduit.

7. Raccord pour conduit d'injection selon l'une des revendications précédentes, caractérisé en ce que chaque bague de compression (6) présente, du côté de l'embout, un épaulement annulaire plan (6a) faisant suite, vers l'extérieur, à la naissance de la surface circonférentielle extérieure (11) de son appendice de soutien (10).

8. Raccord pour conduit d'injection selon l'une des revendications 1 à 6, caractérisé en ce que chaque bague de compression (6) présente un épaulement de butée (14) en forme de cône creux faisant saillie vers l'extérieur, en partant de la naissance de la surface circonférentielle extérieure (11) de son appendice de soutien (10), perpendiculaire en section annulaire à la surface circonférentielle conique.

9. Raccord pour conduit d'injection selon l'une des revendications précédentes, caractérisé en ce que chaque bague de compression (6) est formée d'une partie de bande profilée coupée en longueur et roulée en bague avec formation d'un point de séparation (6').

10. Procédé de fabrication d'un embout de raccordement du raccord pour conduit d'injection selon la revendication 2 et éventuellement une ou plusieurs des revendications 3 à 9, caractérisé en ce que l'on borde l'extrémité libre du conduit d'injection (1) autour de la bague de compression (6) formant en même temps une matrice perdue de l'outil de pression, avec formation de l'ajustement serré.

11. Procédé selon la revendication 10, caractérisé en ce que le bordage de l'extrémité du conduit d'injection (1) et le bordage de cette extrémité de conduit autour de la bague de compression (6) s'effectuent en trois opérations avec trois poinçons (16, 16a, 16b,) chaque fois amenés successivement par un mandrin (18) dans l'extrémité du conduit d'injection (1).

12. Procédé selon l'une des revendications 10 et 11, caractérisé en ce que l'on fabrique la bague de compression (6) avec enlèvement de copeaux.

13. Procédé selon l'une des revendications 10 et 11, caractérisé en ce que l'on fabrique la bague de compression (6) sans enlèvement de copeaux.

14. Procédé selon la revendication 13, caractérisé en ce que l'on coupe en longueur la bague de compression (6) dans une bande profilée et qu'on la roule en bague avec formation d'un point de séparation.

**Fig.1**

*Fig. 2*

*Fig. 3*

0 142 525

Fig.4